# EUROPEAN PATENT SPECIFICATION

(11) **EP 0 925 421 B1**
(45) Date of publication and mention of the grant of the patent: **18.04.2007**
(21) Application number: 97940501.6
(22) Date of filing: 08.09.1997
(51) Int. Cl.: E06B 3/66, E06B 9/264

(54) **Spacer frame assembly for sealed glas window units**
Abstandshalterrahmen für Isolierglasfenster
Cadre d'espacement pour ensemble fenêtres scellées

(30) Priority: 09.09.1996 NO 963765; 23.01.1997 NO 970295
(43) Date of publication of application: 30.06.1999
(73) Proprietor: Hagen, Helge, 9900 Fredrikshavn (DK)
(72) Inventor: Hagen, Helge, 9900 Fredrikshavn (DK)
(74) Representative: Lindblom, Erik J
(86) International application number: PCT/NO1997/000239
(87) International publication number: WO 1998/010164

(56) References cited:
- EP-A- 0 238 277
- NO-B- 136 941
- US-A- 5 178 200

## Description

### Technical Field

The present invention concerns a special assembly of a spacer frame for a sealed glass unit, such as windows, insulation glass windows, thermoglass windows etc. The spacer frame assembly, according to the present invention, comprises a number of constituent parts, making a polygonal, preferably mainly square, frame, where said spacer frame assembly cooperates with two glass panes of the window, by forming an upper and a lower horizontal profile arrangement, at least two side parts, all of which comprise at least one linear, listing or frame part, as well as corresponding corner keys.

The upper horizontal profile arrangement of the spacer frame assembly has a design, which facilitates an installation of a mechanism for a blind.

The blind is fixed underneath the upper horizontal profile arrangement and will thereby be hanging in-between glasses of said sealed glass unit.

### DESCRIPTION OF THE BACKGROUND ART.

It is previously known different kinds of spacer frame assemblies, adapted for surrounding glass panes, for causing a sealed glass window or a sealed glass unit, whereby a spacer frame assembly is formed from a number of constituent parts or frame sections in the form of upper or lower horizontal profile arrangements, associated corner keys and side parts.

A first embodiment is shown and described in the patent publication US-A-5 178 200, which is consider to be the most relevant prior art.

This publication discloses venetian blinds, pleated blinds or the like, suspended in a cord drive system mounted in a housing, adapted to be positioned between glass panes in a double glass window, particularly causing an insulating glass unit.

The cord drive system is connected with a laterally arranged, longitudinal support shaft (16), mounted in the housing, which support shaft (16) is arranged rotatable as well as laterally displaceable in an axial direction in order to accomplish winding and dewinding of the cord drives (10,12; 66; 78, 78') in one single layer along parts of a support shaft, in order to hoist or lower the blind, respectively.

The support shaft (16) is provided with threads in engagement with a threaded member (24,28), which is not rotatably connected in said housing (2), effecting that said support shaft (16) by rotation synchronously, is being moved in an axial direction.

A second embodiment falling within the technical field of the present invention is shown and described in the patent publication NO-B-136 941.

This publication discloses a multiglass arrangement having at least two glass panes (1,9) arranged adjacent each other via distance means (10,11), where a heating element (2), consisting of an electric resistance, is attached to the inner surface of a glass pane and with connecting bands (3,4).

These bands (3,4) are extending over a surface, arranged between said distance means (10) and an inner surface of the glass pane, and exposing end contact means (7,8).

Said distance means (10) is in the form of two metallic parts, electrically insulated from each other.

A third embodiment may be mentioned, said embodiment is shown and described in the patent publication EP-A2-0 238 277.

This publication discloses a mechanism for adjusting the tilt angle of slats of a slat blind, positioned between panes of glass of a sealed window unit.

The mechanism is sealed about an aperture through one of the panes and includes a flexible cable within a flexible tube, extending from the mechanism to a control mechanism for the blind.

The flexible tube maintains the window seal and the cable enables torque to be transmitted from the mechanism to the tilt control mechanism of the blind. Thereby allowing direct external mechanical control of the tilt angle of the slats, without breaking a hermetic seal for the window.

### SUMMARY OF THE PRESENT INVENTION.

The present invention has as its goal to offer a spacer frame assembly, adapted to glass panes of a sealed glass window unit, where a mechanism for a blind may be fixed to an upper horizontal profile arrangement.

The technical problems and the significant features, related to the present invention, are mentioned in and introduced into the following description over a number of preferred embodiments.

### BRIEF DESCRIPTION OF THE DRAWING.

The invention will be more closely disclosed with reference to the accompanying drawings and the figures in which;
**Figure 1** shows exploited a square or rectangular spacer frame assembly, exposing the significative features related to the present invention,
**Figure 2** shows a sectional view of a sealed glass window as a unit, with an inserted lower horizontal profile arrangement of the spacer frame assembly,
**Figure 3** shows a sectional view of an upper part, of an upper horizontal profile arrangement,
**Figure 4** shows a sectional view of a lower part of said upper horizontal profile arrangement,
**Figure 5** shows in a perspective view an asymmetric corner key,
**Figure 6** shows in a perspective view an end section of said lower part, according to figure 4,
**Figure 7** shows in a perspective view an end part or a plug arrangement, adapted to be supported by said lower part of the upper horizontal profile arrangement,
**Figure 8** shows in a side view said plug arrangement, shown in figure 7, exposing four wings,
**Figure 9** shows in a side view said plug arrangement, according to figures 7 and 8, adapted to be supported by and covered by an upper part of said upper horizontal profile arrangement,
**Figure 10** shows a side view and in a section, cooperating upper and lower parts of said upper horizontal profile arrangement,
**Figure 11** shows, in a sectional view, a corner, related to upper and lower parts of said upper horizontal profile arrangement at its right hand side, and with a plug arrangement inserted into said profile arrangement,
**Figure 12** shows, in four different plan views, one and the same asymmetric corner key, adapted for the right hand side of the upper horizontal profile arrangement and its lower part,
**Figure 13** shows in an end view and in a cross-section an inserted plug arrangement,
**Figure 14** shows in a side section and in a cross-section said plug arrangement only, according to figure 13,
**Figure 15** shows in a side view said plug arrangement, according to figure 13, and

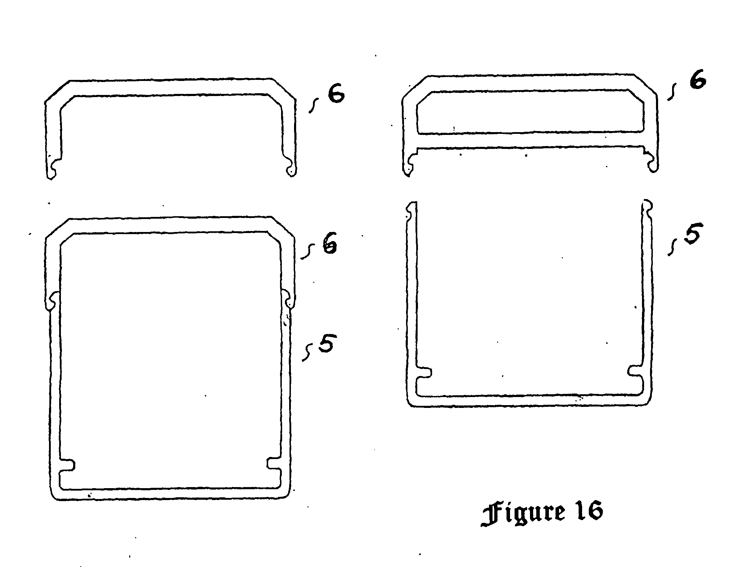

**Figure 16** shows two suggested interactions between two different upper parts of said upper horizontal profile arrangement and using one and the same lower part.

### DESCRIPTION OF EMBODIMENTS AT PRESENT PREFERRED.

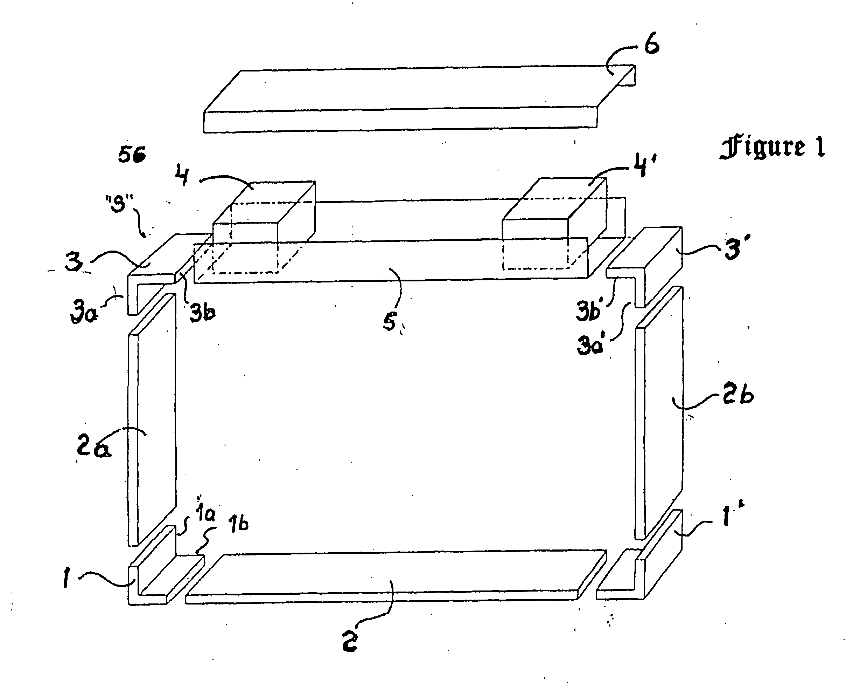

The present invention refers to a spacer frame assembly "S", formed by a number of constituent parts, 1, 1'; 2; 2a, 2b; 3, 3'; 4, 4' and 56; 5, 6, arranged preferably to a square frame structure, as shown in figure 1.

The square frame structure sealingly cooperates with two spaced apart glass panes 7, 7' of a window, whereby a blind is able to be hung, in a lower part 5, in the form of a U-shaped first element 5, between said glass panes 7, 7'.

Said spacer frame assembly "S" comprising;
an upper horizontal profile arrangement 56,
   · consisting of a lower part, in the form of a U-shaped first element 5, and an upper part, in the form of a U-shaped second element 6,
· a lower horizontal profile arrangement, in the form of a spacer element 2
· and two side parts 2a, 2b,
   · each connected with said upper horizontal profile arrangement 56 and said lower horizontal profile arrangement 2, in the form of said spacer element 2, by two symmetric corner keys 1, 1' and two asymmetric corner keys 3, 3'

Said lower U-shaped first element 5,
comprising a spacer bed 15 connected to
two vertically extending spacer legs 16, 16'.

Said two symmetric corner keys 1, 1'
· are connected, with a first leg 1a thereof, to one of said side parts 2a, 2b and with the second leg 1b thereof to said lower horizontal profile arrangement formed as a spacer element 2.

Said two asymmetric corner keys 3, 3'
· are connected, with a first leg 3a thereof, to one of said side parts 2a, 2b and with a second leg 3b thereof to said upper horizontal profile arrangement 56 and its lower part 5, in the form of a U-shaped first element 5.

The present invention exposes especially;
that each of said asymmetric corner key 3, 3' has
   a first leg 3a thereof adapted to fit with its associated first and second side part 2a, 2b,
   and a second leg 3b thereof exposing parallel grooves 19, 19', adapted to
embrace a section of said spacer bed 15.

A punched out slot 20 is further provided at each end of said spacer bed 15 into which slot 20 said second leg 3b of said asymmetric corner key 3 is pressed,

Further said lower U-shaped first element 5 and said upper U-shaped second element 6 are snapped together to form said upper horizontal profile arrangement 56,

More over it is suggested and proposed that each of said asymmetric corner key 3, 3' is adapted not to completely fill an open space at each end of said upper horizontal profile arrangement 56.

List of reference signs;
- ("S") =: spacer frame assembly
- ("U") =: closed spacer unit
- (1) =: symmetric corner key
- (1a) =: first side part of said symmetric corner key
- (1 b) =: second side part of said symmetric corner key
- (2) =: lower, as a listing formed, horizontal profile arrangement, in the form of a spacer element
- (2a) =: first side part
- (2b) =: second side part
- (3) =: asymmetric corner key
- (3a) =: asymmetric corner key 3 related first leg
- (3b) =: asymmetric corner key 3 related second leg
- (4) =: plug arrangement
- (56) =: upper horizontal profile arrangement
- (5) =: lower part of said upper horizontal profile arrangement in the form of a U-shaped first element
- (6) =: upper part of said upper horizontal profile arrangement in the form of a U-shaped second element
- (7) =: spaced apart glass panes (to be noted as no part of the spacer frame assembly "S")
- (8) =: sealing material, as a non-vulcanising rubber
- ((8)) =: excess sealing material
- (9) =: inwardly pointing corner
- (11) =: upper part second element 6 related groove
- (13) =: upper part second element 6 related leg
- (14) =: upper part of said upper horizontal profile arrangement 56 as a first element 5 related recessed or protruding element, in the form of a groove
- (15) =: lower U-shaped first element 5 related spacer bed
- (16) =: lower U-shaped first element 5 related spacer leg
- (17) =: leg 16 related groove
- (19) =: asymmetric corner key 3' related groove
- (20) =: punched out rectangular slot
- (21) =: hole, in a lower U-shaped first element 5 related spacer leg
- (22) =: lower U-shaped first element 5 related edge
- (24) =: plug arrangement 4 related wings
- (25) =: wing related designed part, as a groove
- (26) =: plug arrangement 4 related first groove
- (27) =: circular plug arrangement, adapted to said hole 21
- (28) =: aluminium tube
- (29) =: sealing material
- (30) =: plug arrangement 4 related groove
- (32) =: short aluminium tube
- (33) =: sealing material, between the plug arrangement 4 and the tube 32
- (35) =: sealant

The components of the spacer frame assembly "S", as shown in figure 1, have the following reference numbers:

Reference numbers 1, 1' relate to two corner keys of the spacer frame assembly "S", forming a right angle with two side parts 2a; 2b, wherein both of the side parts are symmetric.

Reference number 2 relates to a lower horizontal profiler arrangement or listing, formed as a spacer element, connected at least one end thereof to one of said corner keys 1, 1'.

Reference numbers 3, 3' relate to two asymmetric corner keys, connected with one leg 3a, (3a') thereof to a first side part 2a, (2b).

The other leg 3, 3b' of said asymmetric corner keys 3, 3' is connected to an upper horizontal profile arrangement 56 as a spacer listing element or arrangement 56, comprising of two U-shaped elements, with the reference numbers 5 and 6.

The side parts 2a, 2b are used as two vertical parts connected to said lower spacer element 2 as a listing element, to form a rectangular spacer frame assembly "S".

The lower horizontal first element 5 has a U-shaped profile, and this element 5 is used as a base for a mechanism related to a blind arrangement, however not shown.

The assembly "S", according to the present invention, requires the use of two different types of corner keys to make a rectangular spacer frame, i.e. the symmetric corner keys 1, 1' and the asymmetric corner keys 3, 3'.

The asymmetric corner keys 3, 3' are one of the main elements of the present invention, and such asymmetric keys 3, 3' make it possible to assemble a corner, where a lower U-shaped first element 5 and a lower spacer element 2 are joined without having the inner part of said first element 5 being filled by a corner key 3.

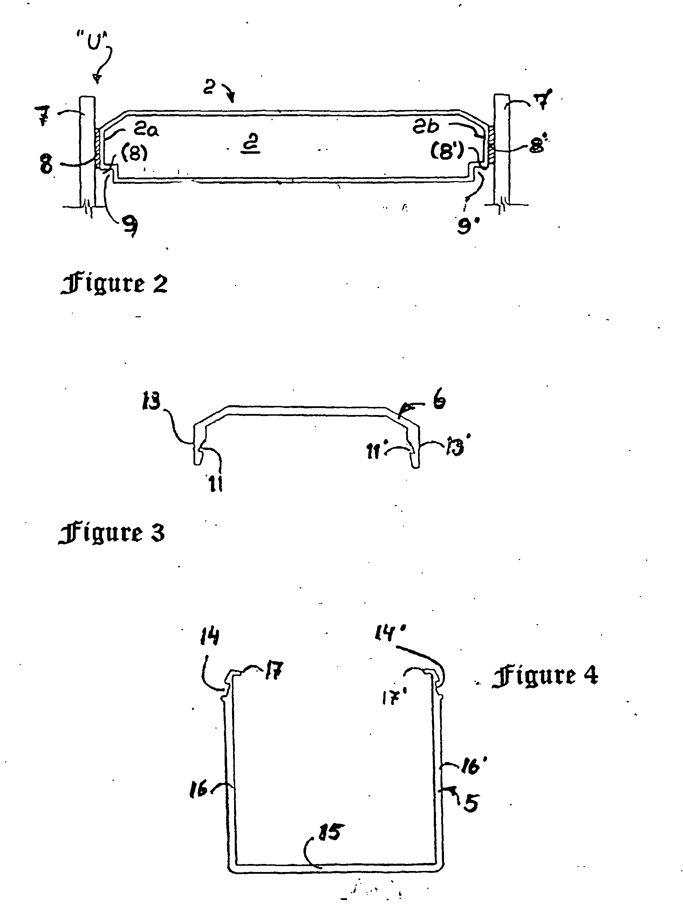

Fig. 2 shows a sectional view of a sealed glass unit. In this figure the reference numbers have the following meaning:

The reference number "U" relates to a sealed or closed spacer frame assembly or unit. The reference number 8, 8' relates to sealing materials, e.g. a non-vulcanising rubber "butyl", which are located between a first glass pane 7 and a second glass pane 7' and said spacer element 2 and the two side parts 2a, 2b.

The sealing materials 8, 8' are to provide a substantially tight sealing for air and moisture between the glass panes 7, 7' and the enclosed spacer element 2. The sealing materials 8, 8' are accordingly of a non-vulcanising type, which remains sticky over an indefinite period of time.

The spacer element 2 is especially designed with two inwardly extending corners 9, 9'. The inwardly pointing corners 9, 9' will form a space as a reservoir for excess sealing materials (8), (8'), which might be squeezed out from between the spacer element 2 or side parts 2a, 2b and the glass panes 7, 7', when the glass panes 7, 7' are pressed against said spacer element 2 and said side parts 2a, 2b.

Any excess sealing materials (8); (8') will be kept in the location provided by the corners 9, 9' and the glass panes 7.

The excess sealing materials (8) and (8') will thus not penetrate into the rectangle formed by the two glass panes 7, 7' and the inner side of the spacer element 2.

It is important that the area between the two glass panes 7, 7' and the spacer element 2, 2a, 2b is kept free for excess sealing materials (8) and (8') since the slats of a free-hanging blind inside a sealed unit "U", will stick to any sealing material which is present and overflowing outside of the above described corner 9, 9' areas, when the window with the sealed glass unit "U" is operated and the blind is put into motion.

This is a typical problem for some prior types of sealed units with a built-in blind.

Providing a spacer frame assembly "S" for a sealed glass unit "U" with corner keys 1, 1'; 3, 3', as disclosed supra, is previously not known. The objective of the corner areas 9, 9' is to prevent any excess sealing materials (8) and (8') from appearing inside the light-opening of the sealed glass unit and thereby causing contact between the slats of the blind lying between the window panes 7, 7' of the sealed glass unit.

Fig. 3 shows a sectional view of an upper part 6 of an upper horizontal profile arrangement 56 from fig. 1. The second part or element 6 comprises of two legs 13, 13' with a snapping action and comprising protruding and/or recessed elements, e.g. one or more grooves 11, 11' on its inside.

Such grooves cooperate and correspond to similar recessed and/or protruding elements 14, located on the outside of the lower part or U-shaped first element 5, shown in fig. 1, and in a cross-section in fig. 4.

The two elements 5 and 6 may be assembled by snapping the grooves 11,11'; 14, 14' together and thereby forming a closed profile arrangement 56. The profile arrangement is shown in cross section in figure 10.

A novel trait, according to the present invention, is providing an opportunity to make a closed frame assembly "S", formed by two open first and second elements 5 and 6, for a sealed glass unit.

Furthermore, it is a goal for the present invention to obtain a closed profile for a sealed glass unit or a closed spacer unit, comprising of two elements 5, 6, which have been snapped together and which form a closed profile arrangement 56, which is suitable and which has sufficient room or space for installing a mechanism for a blind.

The lower first element 5 is shown in fig. 4 and comprises a spacer bed 15 and two spacer legs 16, 16'.

At the upper ends of the spacer legs 16, 16' there is provided inwardly oriented grooves 17, 17.

These grooves 17, 17' secure components fixed inside the spacer bed 15 and secure them into the correct position in the closed profile arrangement 56, preventing them from falling out.

On the outer sides of the legs 16, 16' are the snapping grooves 14, 14' for snapping the two elements 5 and 6 together, as disclosed supra.

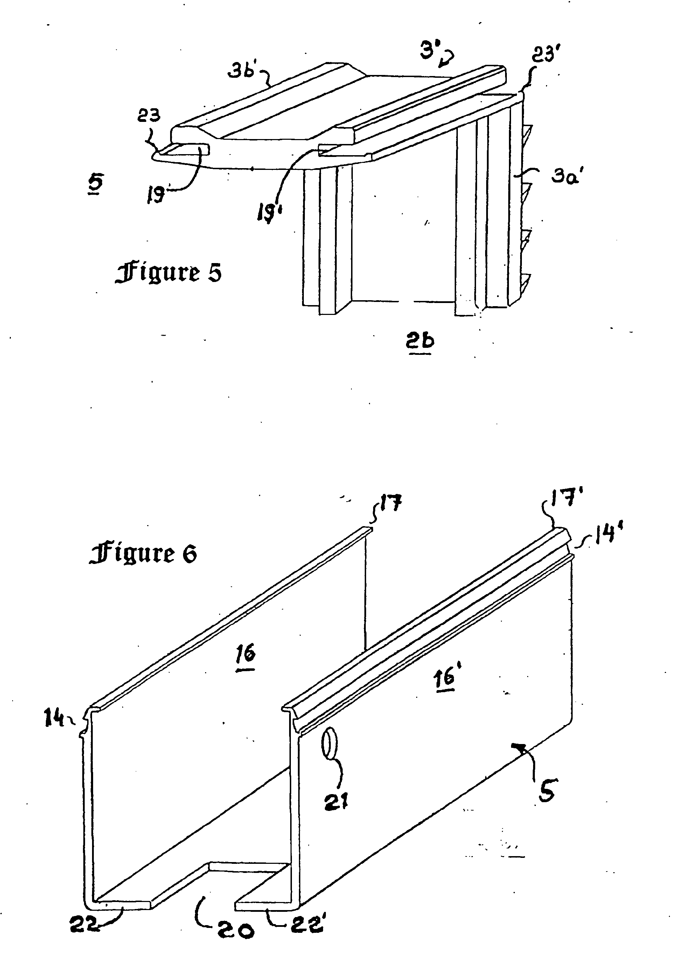

When a lower U-shaped first element 5 is cut into a correct length to fit inside a sealed glass unit, there is, as shown in fig. 6, punched out a rectangular slot 20 in each end of said element 5.

This rectangular slot 20 is required for assembling the lower U-formed first element 5 and a corner key 3 resp. 3'.

An asymmetric corner key 3' is shown in Fig. 5. One leg 3b' of the key 3' is to be located inside said first element 5.

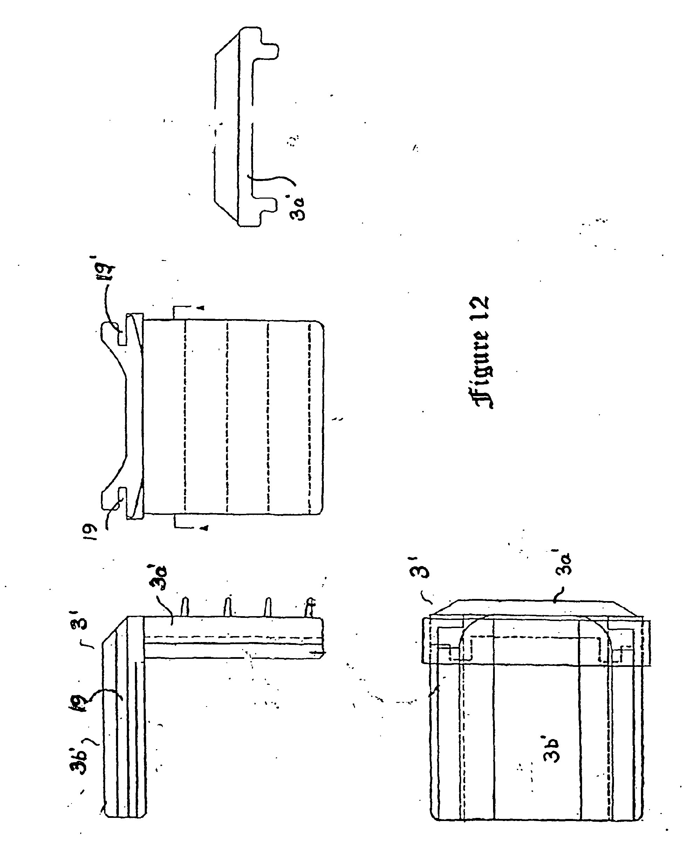

The shape of the corner key 3' is especially designed, as shown in Fig. 12, to fit into said element 5.

The leg 3b' of the corner key 3' is provided with a number of lengthwise running grooves 19, 19'. When the leg 3b' is installed into the U-shaped first element 5, the leg 3b' is pressed onto the spacer bed 15 of the element 5 in such a way that the grooves 19, 19' on the leg 3b' is embracing each section or edge of the spacer bed 15, which is to be found on each side of the punched-out slot 20. These parts or edges of the spacer bed 15 are given the reference numbers 22, 22'.

Two fins 23, 23' on the edge of the grooves 19, 19' will provide a resistance between the leg 3b' and the spacer bed 15, which prevents the corner key 3' from dropping out from the first element 5 or its upper horizontal profile arrangement 56.

The corner key 3 resp. 3' is assembled with the upper horizontal profile arrangement 56, comprising the two U-shaped elements 5 and 6, pressing the corner keys 3, 3' onto the end of the element 5 in such a way that the edges 22, 22' on the first element 5 fit into the grooves 19, 19' in each of the corner key 3, 3'.

One of the inventive features of the present invention is such an assembly of corner keys 3 and 3' and the upper horizontal profile arrangement 56, where a complete leg of the corner key 3 or 3' does not fill the inner part of the profile arrangement 56.

As shown in fig. 6, a hole 21 is preferably drilled at each end of the first element 5. This hole 21 is to be used to fix an end plug arrangement 4 (or 4') into position, as shown in fig. 1.

This also represents a novel aspect of the present invention, i.e. assembling an upper horizontal profile arrangement 56 and corner keys 3, 3', where the corner keys are fixed to one side of the element 5 and is not filling the open space inside the horizontal profile arrangement 56.

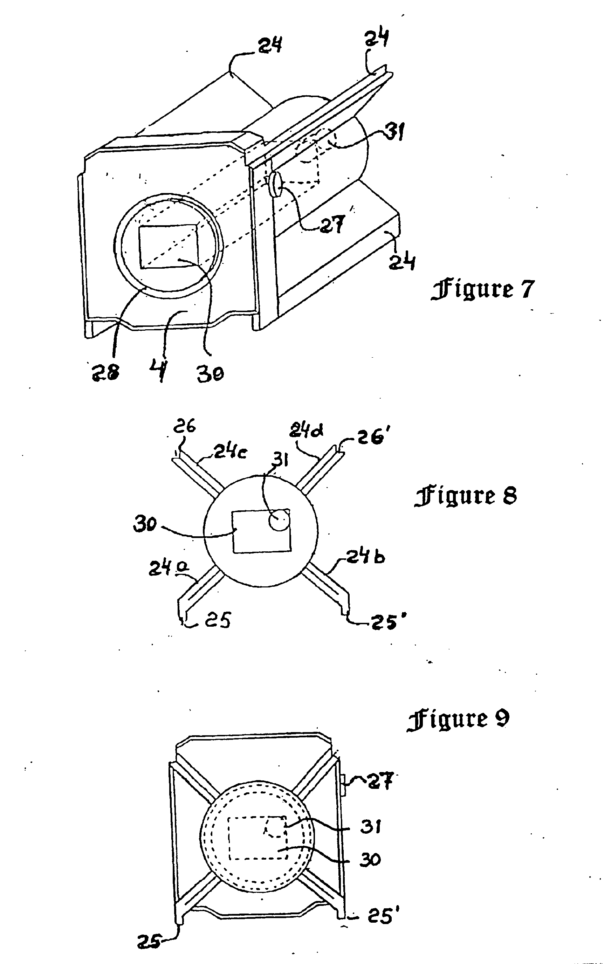

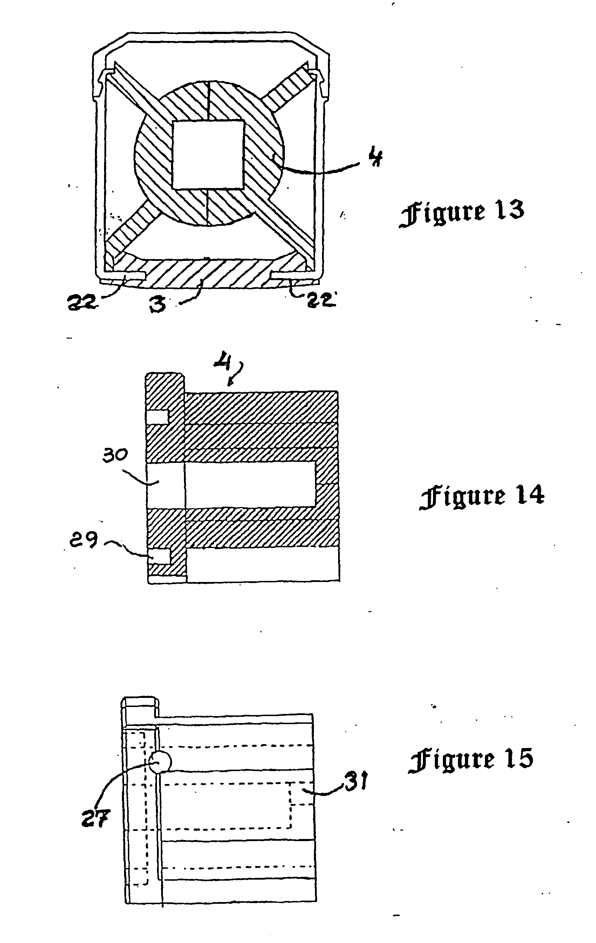

A plug arrangement, given the reference numeral 4, is shown in Figs. 7, 8, 9, 14 and 15. The plug arrangement 4 comprises of four wings 24. The two lower wings 24a, 24b have designed parts 25, 25' made to fit between spacer legs 16, 16' of the U-shaped first element 5 and the spacer bed 15.

The two upper wings 24c, 24d have a shape to fit in underneath the upper part of the U-shaped first element 5, and they are kept in position by the sections 17, 17' on the U-shaped first element 5.

On one side of the plug 4 there is a circular plug arrangement 27, which fits into the hole 21 on the U-shaped first element 5.

This plug arrangement 27 prevents said plug arrangement 4 from moving, when fitted inside the U-shaped first element 5.

On the outer end of the plug arrangement 4 is a groove 30. This groove 30 is provided with a male part of an electric connector. This system facilitates an easy connection of electric power to a motor built inside the sealed unit. This constellation between an electric connector and a plug arrangement in the profile arrangement 56 is novel and represents a part of the present invention.

The construction of the sealed glass unit "U" disclosed supra makes the production of such units easier since there are no loose electric cables hanging around, when the sealed glass unit "U" is to be manufactured.

The plug arrangement 4 is preferably to be manufactured in a synthetic material. Synthetic materials have a good adhesion to sealant materials, normally used in sealed glass units.

Direct connection between the synthetic material, the plug arrangement and the sealant should therefore be avoided.

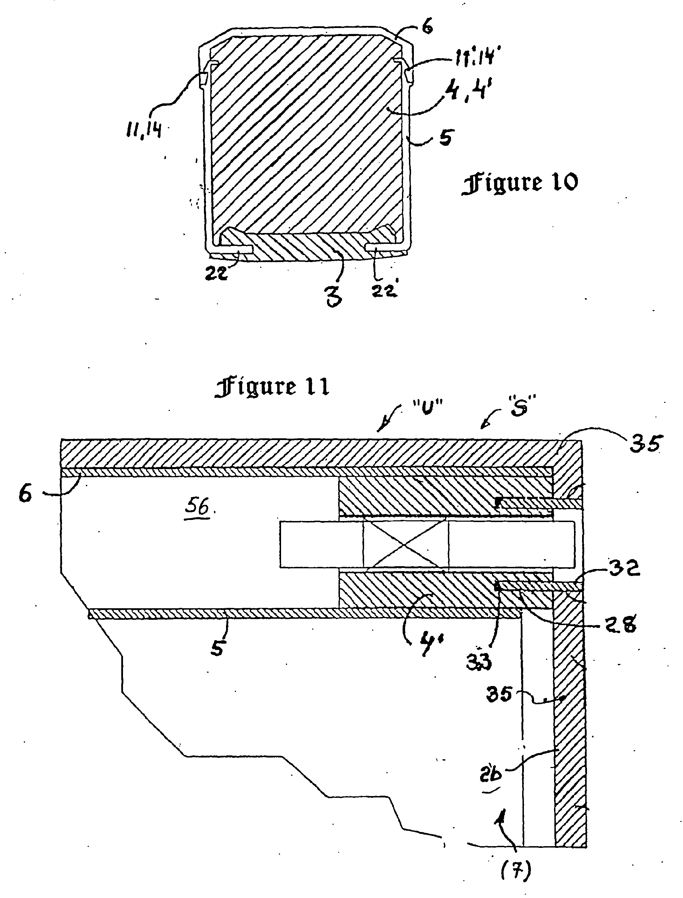

Fig. 11 shows a sectional view of a corner of a sealed glass unit "U" and an assembly "S" depicting a corner of the sealed unit where the reference number (7) is used for a glass pane, the reference number 35 is used for the sealant which glues the glass pane (7) to the spacer element 2b, the reference numbers 5 and 6 show the two U-shaped first and second elements, when they are in a snapped-together configuration to form an arrangement 56 and 4' is the reference number for the plug arrangement.

The reference number 32 depicts a short aluminium tube with external threads, and which is screwed into the synthetic material in a groove 28. The reference number 33 shows a sealing material between the plug arrangement 4 and said aluminium tube 32.

As the tube 32 reaches outside the end of.the plug arrangement 4', the sealing material 33 will work between the glass pane (7) and the tube 32, and not between the glass pane and the synthetic plug arrangement 4'. The adhesion exists accordingly between the aluminium tube 32 and the glass, being materials which both have excellent adhesion properties to the sealant.

The construction of the spacer frame, according to the invention, is disclosed supra with reference to a special embodiment depicted in the figures accompanying the application. However, the scope of the invention is not to be construed as being founded in the above mentioned embodiment, but rather through the following claims.

## Claims

1. Spacer frame assembly (S),
· formed by a number of constituent parts, (1, 1'; 2; 2a, 2b; 3, 3'; 4, 4' and 56; 5, 6)
· arranged to a square frame structure,
able to cooperate with two spaced apart glass panes (7, 7') of a window, whereby a blind is able to be hung between said glass panes (7, 7'),
said spacer frame assembly comprising;
an upper horizontal profile arrangement (56)
consisting of a lower part, in the form of a U-shaped first element (5) and an upper part, in the form of a U-shaped second element (6)
· and a lower horizontal profile arrangement, in the form of a spacer element (2)
and two side parts (2a, 2b),
· each connected with said upper horizontal profile arrangement (56) and said lower spacer element (2) by two symmetric corner key (1, 1') and two asymmetric corner keys (3, 3')
whereby said lower U-shaped first element (5)
· comprising a spacer bed (15) and associated
· two spacer legs (16)
whereby said two symmetric corner keys (1, 1')
are each connected, with a first leg (1a) thereof, to one of said side parts (2a, 2b) and with a second leg thereof (1 b) connected to said lower spacer element (2)
whereby said two asymmetric corner keys (3, 3')
are connected, with a first leg (3a) thereof, to one of said side parts (2a, 2b) and with a second leg (3b) thereof to said upper horizontal profile arrangement (56)
**characterized in;**
**that** each of said asymmetric corner key (3, 3') has
a first leg (3a) thereof adapted to fit with its associated side part (2a, 2b),
and a second leg (3b) thereof exposing grooves (19), adapted to embrace a section of said spacer bed (15),
· that a punched out slot (20) is provided at each end of said spacer bed (15) into which slot (20) said second leg (3b) of said asymmetric corner key (3) is pressed in,
**that** said lower U-shaped first element (5) and said upper U-shaped second element (6) are snapped together to form said upper horizontal profile arrangement (56),
and **that** each of said asymmetric corner key (3, 3') is adapted not to fill an open space at each end of said upper horizontal profile arrangement (56).

2. Spacer frame assembly according to claim 1, **characterized in that** said spacer frame assembly is associated with a sealing (8), adjacent constituent part or section (2, 2a, 2b).

3. Spacer frame assembly according to claim 1 or 2, **characterized in that** said upper U-shaped second element (6) comprises two legs or wall sections (13, 13'), each adapted with means for a snapping action with a lower U-shaped first element (5), and comprising protruding and/or recessed elements, e.g. one or more grooves (11, 11') on its inside, cooperating with corresponding similar recessed and/or protruding snapping elements (14, 14'), being located on said lower U-shaped first element (5), comprising two legs or wall sections, each adapted with means for a snapping action.

4. Spacer frame assembly according to claim 3, **characterised in that** there is provided, at upper edges of said legs or wall sections (13, 13'), inwardly oriented grooves or protrusion (17, 17'), which secure components fixed inside said spacer bed (15) and securing said components in a correct position within said spacer bed, preventing them from falling out.

5. Spacer frame assembly according to claim 1, **characterized in that** the shape of said asymmetric corner keys (3, 3') is especially designed with a first leg (3a') to fit inside a side part (2b), and a second leg (3b') to fit to said lower first element (5), via a number of lengthwise running grooves (19).

6. Spacer frame assembly according to claim 5, **characterized in that** said asymmetric corner keys (3, 3') are assembled with and supported by said upper horizontal second element (6) pressing each of said corner keys (3, 3') onto an end of said lower horizontal first element (5) in such a way that edges (22) on said lower horizontal first element (5) fits into grooves (19) formed in said corner key (3, 3').

7. Spacer frame assembly according to claim 1, **characterized in that** a plug arrangement (4), comprising four wings (24), including two lower wings, with a designed part (25) made to fit between legs (16, 16') of said U-shaped lower first element (5) and said spacer bed (15) in said U-shaped lower first element (5), and two upper wings, having a shape to fit in under an upper part of the lower U-shaped lower first element (5), and being kept in a position by grooves or protrusions (17,17') on the U-shaped first element (5).

8. Spacer frame assembly according to claim 7, **characterized in that** onto an outer end section of said plug arrangement (4) there is a groove (30), this groove (30) being provided with a male part of an electric connector, facilitating an easy connection of electric power to a motor, built inside said assembly.

## Patentansprüche

1. Abstandshalterrahmenanordnung (S),
- gebildet aus einer Vielzahl von Bestandteilen (1, 1'; 2; 2a, 2b; 3, 3'; 4, 4' und 56; 5, 6),
- angeordnet zu einer quadratischen bzw, rechtwinkligen Rahmenstruktur,
- geeignet zum Miteinanderwirken mit zwei voneinander beabstandeten Glasscheiben (7, 7') eines Fensters, wodurch eine Abschirmung zwischen die Glasscheiben (7, 7') gehängt werden kann,
wobei die Abstandshalterrahmenanordnung umfasst:
- eine obere horizontale Profileinrichtung (56),
- bestehend aus einem unteren Teil in Form eines U-förmigen ersten Elements (5) und einen oberen Teil in Form eines U-förmigen zweiten Elements (6)
- und eine untere horizontale Profileinrichtung in Form eines Abstandshalterelements (2)
- und zwei Seitenteile (2a, 2b),
- jeweils verbunden mit der oberen horizontalen Profileinrichtung (56) und dem unteren Abstandshalterelement (2) durch zwei symmetrische Eckverbinder bzw. -befestigungselemente (1, 1') und zwei asymmetrische Eckverbinder bzw. - befestigungselemente (3, 3'),
wobei das untere U-förmige erste Element (5)
- eine Abstandshaltersohle (15) umfasst und dazu gehörend
- zwei Abstandshalterschenkel (16),
wobei die zwei symmetrischen Eckverbinder (1, 1')
- jeweils verbunden sind mit einem ersten Schenkel (1a) davon zu einem der Seitenteile (2a, 2b) und mit
- einem zweiten Schenkel (1b) davon, verbunden mit dem unteren Abstandshalterelement (2),
wobei die zwei asymmetrischen Eckverbinder (3, 3')
- verbunden sind mit einem ersten Schenkel (3a) davon zu einem der Seitenteile (2a, 2b) und mit
- einem zweiten Schenkel (3b) davon zu der oberen horizontalen Profileinrichtung (56),
**dadurch gekennzeichnet,**
- **dass** jeder der asymmetrischen Eckverbinder (3, 3')
- einen ersten Schenkel (3a) davon aufweist, angepasst zum Einpassen mit seinem dazugehörigen Seitenteil (2a, 2b),
- und einen zweiten Schenkel (3b) davon, der Nuten (19) freilegt, angepasst zum Umfangen eines Abschnitts von der Abstandshaltersohle (15),
- **dass** ein ausgestanzter Schlitz (20) an jedem Ende von der Abstandshaltersohle (15) angebracht ist, wobei in den Schlitz (20) der zweite Schenkel (3b) von dem asymmetrischen Eckverbinder (3) gedrückt wird,
- **dass** das untere U-förmige erste Element (5) und das obere U-förmige zweite Element (6) miteinander eingeschnappt werden zur Bildung der oberen horizontalen Profileinrichtung (56),
- und **dass** jeder der asymmetrischen Eckverbinder (3, 3') angepasst ist, um nicht einen offenen Raum an jedem Ende von der oberen horizontalen Profileinrichtung (56) zu füllen.

2. Abstandshalterrahmenanordnung nach Anspruch 1, **dadurch gekennzeichnet, dass** die Abstandshalterrahmenanordnung mit einer Dichtung (8), benachbart zu Bestandteil oder Abschnitt (2, 2a, 2b), verbunden ist.

3. Abstandshalterrahmenanordnung nach Anspruch 1 oder 2, **dadurch gekennzeichnet, dass** das obere U-förmige zweite Element (6) zwei Schenkel oder Wandabschnitte (13, 13') umfasst, jeweils angepasst mit Mitteln für eine Einschnappwirkung mit einem unteren U-förmigen ersten Element (5), und umfassend hervorspringende und/oder ausgesparte Elemente, z.B. eine Nut oder mehrere Nuten (11, 11'), auf seiner Innenseite, im Zusammenwirken mit entsprechenden ähnlichen ausgesparten und/oder hervorspringenden Einschnappelementen (14, 14'), die am unteren U-förmigen ersten Element (5) angeordnet sind, umfassend zwei Schenkel oder Wandabschnitte, jeweils angepasst mit Mitteln für eine Einschnappwirkung.

4. Abstandshalterrahmenanordnung nach Anspruch 3, **dadurch gekennzeichnet, dass** an oberen Kanten bzw. Rändern von den Schenkeln oder Wandabschnitten (13, 13'), einwärts ausgerichtet Nuten oder Vorsprünge (17, 17'), bereitgestellt wird, die Komponenten, fixiert an der Innenseite der Abstandshaltersohle (15), befestigen, und Befestigen der Komponenten in einer korrekten Position innerhalb der Abstandshaltersohle, um sie vor dem Herausfallen zu bewahren.

5. Abstandshalterrahmenanordnung nach Anspruch 1, **dadurch gekennzeichnet, dass** die Form der asymmetrischen Eckverbinder (3, 3') insbesondere mit einem ersten Schenkel (3a') zum Einpassen in einen Seitenteil (2b), und einem zweiten Schenkel (3b') zum Einpassen in das untere erste Element (5) über eine Vielzahl von längs verlaufenden Nuten (19) versehen ist.

6. Abstandshalterrahmenanordnung nach Anspruch 5, **dadurch gekennzeichnet, dass** die asymmetrischen Eckverbinder (3, 3') angeordnet sind mit und getragen werden von dem oberen horizontalen zweiten Element (6), welches jeden von den Eckverbindern (3, 3') auf ein Ende des unteren horizontalen ersten Elements (5), in einer solchen Weise drückt, dass Kanten (22) auf dem unteren horizontalen ersten Element (5) in Nuten (19), gebildet in dem Eckverbinder (3, 3'), einpassen.

7. Abstandshalterrahmenanordnung nach Anspruch 1, **gekennzeichnet durch** eine Steckereinrichtung (4), umfassend vier Flügel (24), einschließlich zweier unterer Flügel, mit einem so gestalteten Teil (25), das es zwischen Schenkel (16, 16') des U-förmigen unteren ersten Elements (5) und der Abstandshaltersohle (15) in dem U-förmigen unteren ersten Element (5) passt, und zweier oberer Flügel, mit einer Form zum Einpassen unter einen oberen Teil des unteren U-förmigen, unteren ersten Elements (5), und **durch** Nuten oder Vorsprünge (17, 17') auf dem U-förmigen ersten Element (5) in einer Position gehalten.

8. Abstandshalterrahmenanordnung nach Anspruch 7, **dadurch gekennzeichnet, dass** sich auf einem äußeren Endabschnitt der Steckereinrichtung (4) eine Nut (30) befindet, wobei diese Nut (30) mit einem Patrizenteil bzw. Steckerteil eines elektrischen Verbinders versehen ist, der einen einfachen Anschluss elektrischer Energie für einen Motor, der innerhalb der Anordnung eingebaut ist, gestattet.

## Revendications

1. Ensemble de cadre d'espacement (S), formé par un certain nombre de parties constitutives (1,1'; 2, 2a, 2b ; 3, 3' ; 4, 4' et 56 ; 5,6) agencé sur une structure de cadre carré, capable de coopérer avec deux vitres placées à distance l'une de l'autre (7,7') d'une fenêtre, un store pouvant être suspendu entre lesdites vitres (7, 7'), ledit ensemble de cadre d'espacement comprenant :
- un agencement de profilé horizontal supérieur (56) constitué d'une partie inférieure sous forme d'un premier élément en forme de U (5) et d'une partie supérieure sous forme d'un deuxième élément en forme de U (6)
- et un agencement de profilé horizontal inférieur sous forme d'un élément d'espacement (2)
- et deux parties latérales (2a, 2b), raccordée chacune audit agencement de profilé horizontal supérieur (56) et audit élément d'espacement inférieur (2) par deux clavettes d'angle symétriques (1, 1') et deux clavettes d'angle asymétriques (3, 3')
ledit premier élément inférieur en forme de U (5) comprenant une assise d'espacement (15) et deux montants d'espacement associés (16)
les deux clavettes d'angle symétriques (1, 1') étant chacune raccordée, avec un premier montant (1a) de celle-ci, à l'une desdites parties latérales (2a, 2b) et avec un deuxième montant (1b) de celle-ci, audit élément d'espacement inférieur (2),
les deux clavettes d'angle asymétriques (3, 3') étant raccordées, avec un premier montant (3a) de celles-ci, à l'une desdites parties latérales (2a, 2b) et avec un deuxième montant (3b) de celles-ci, audit agencement de profilé horizontal supérieur (56),
**caractérisé**
**en ce que** chacune desdites clavettes d'angle asymétriques (3, 3') comporte
- un premier montant (3a) de celle-ci adapté pour correspondre à sa partie latérale associée (2a, 2b),
- et un deuxième montant (3b) de celle-ci présentant des rainures (19) adaptées pour entourer une section de ladite assise d'espacement (15),
**en ce qu'**une fente découpée à l'emporte-pièce (20) est prévue à chaque extrémité de ladite assise d'espacement (15), fente (20) dans laquelle ledit deuxième montant (3b) de ladite clavette d'angle asymétrique (3) est pressé,
**en ce que** ledit premier élément inférieur en forme de U (5) et ledit deuxième élément supérieur en forme de U (6) sont encliquetés ensemble pour former ledit agencement de profilé horizontal supérieur (56),
et **en ce que** chacune desdites clavettes d'angle asymétriques (3, 3') est adaptée pour ne pas remplir un espace ouvert à chaque extrémité dudit agencement de profilé horizontal supérieur (56).

2. Ensemble de cadre d'espacement selon la revendication 1, **caractérisé en ce que** ledit ensemble de cadre d'espacement est associé à une partie constitutive ou section d'étanchéité (8) adjacente (2, 2a, 2b).

3. Ensemble de cadre d'espacement selon la revendication 1 ou 2, **caractérisé en ce que** ledit deuxième élément supérieur en forme de U (6) comprend deux montants ou sections de paroi (13, 13') chacun muni de moyens pour un encliquetage avec un premier élément inférieur en forme de U (5) et comprenant des éléments en saillie et/ou en creux, par exemple une ou plusieurs rainures (11, 11') sur sa face intérieure, coopérant avec des éléments d'encliquetage correspondants similaires en creux et/ou en saillie (14, 14'), placés sur ledit premier élément inférieur en forme de U (5), comprenant deux montants ou sections de paroi, chacun muni de moyens pour un encliquetage.

4. Ensemble de cadre d'espacement selon la revendication 3, **caractérisé en ce qu'**il est prévu, au niveau des bords supérieurs desdits montants ou sections de paroi (13, 13'), des rainures ou protubérances (17, 17') orientées vers l'intérieur qui immobilisent les composants fixés à intérieur de ladite assise d'espacement (15) et immobilisent lesdits composants dans une position correcte à l'intérieur de ladite assise d'espacement, les empêchant de tomber.

5. Ensemble de cadre d'espacement selon la revendication 1, **caractérisé en ce que** la forme desdites clavettes d'angle asymétriques (3, 3') est conçue spécialement avec un premier montant (3a') pour s'insérer à l'intérieur d'une partie latérale (2b) et un deuxième montant (3b') pour s'adapter audit premier élément inférieur (5) à l'aide d'un certain nombre de rainures s'étendant longitudinalement (19).

6. Ensemble de cadre d'espacement selon la revendication 5, **caractérisé en ce que** lesdites clavettes d'angle asymétriques (3, 3') sont assemblées avec et supportées par ledit deuxième élément supérieur horizontal (6) pressant chacune desdites clavettes d'angle (3, 3') contre une extrémité dudit premier élément inférieur horizontal (5) de telle manière que les bords (22) sur ledit premier élément inférieur horizontal (5) s'insèrent dans les rainures (19) formées dans lesdites clavettes d'angle (3, 3').

7. Ensemble de cadre d'espacement selon la revendication 1, **caractérisé en ce qu'**un agencement de cheville (4) comprenant quatre ailes (24) comprenant deux ailes inférieures avec une partie façonnée (25) pour s'insérer entre les montants (16, 16') dudit premier élément inférieur en forme de U (5) et ladite assise d'espacement (15) dans ledit premier élément inférieur en forme de U (5) et deux ailes supérieures présentant une forme pour s'insérer sous une partie supérieure du premier élément inférieur en forme de U (5) et étant maintenue en position par les rainures ou protubérances (17, 17') sur ledit premier élément inférieur en forme de U (5).

8. Ensemble de cadre d'espacement selon la revendication 7, **caractérisé en ce qu'**il y a une rainure (30) sur une section d'extrémité extérieure dudit agencement de cheville (4), cette rainure (30) étant munie d'une partie mâle d'un raccord électrique, facilitant un raccordement aisé de courant électrique avec un moteur construit à l'intérieur dudit ensemble.
